(19) Europäisches Patentamt

European Patent Office

Office européen des brevets

(11) Veröffentlichungsnummer: **0 512 388 A2**

# (12) EUROPÄISCHE PATENTANMELDUNG

(21) Anmeldenummer: **92107284.9**

(22) Anmeldetag: **29.04.92**

(51) Int. Cl.5: **B27G 15/00**

(30) Priorität: **08.05.91 DE 4115030**

(43) Veröffentlichungstag der Anmeldung:
**11.11.92 Patentblatt 92/46**

(84) Benannte Vertragsstaaten:
**AT BE CH DK ES FR GB IT LI NL SE**

(71) Anmelder: **FAMAG-WERKZEUGFABRIK, FRIEDRICH AUG. MüHLHOFF**
**Rather Strasse 29 - 31**
**W-5630 Remscheid 1(DE)**

(72) Erfinder: **Pomp, Thomas**
**Raspelweg 16**
**W-5630 Remscheid(DE)**

(74) Vertreter: **Peerbooms, Rudolf, Dipl.-Phys.**
**Postfach 200 208 Dickmannstrasse 45c**
**W-5600 Wuppertal 2(DE)**

(54) **Zylinderkopfbohrer.**

(57) Ein Zylinderkopfbohrer besitzt einen Bohrkopf (2), der mit einer Zentrierspitze (3), mit zwei Umfangsschneiden (4, 5), mit zwei etwa radial verlaufenden Hauptschneiden (6, 7) und mit zwei den Hauptschneiden zugeordneten Spankanälen (8, 9) versehen ist, die zur Umfangsfläche (10) und zur rückwärtigen Stirnfläche (11) des Bohrkopfes (2) hin offen sind. Zur Verbesserung der Späneabfuhr ist jeder Spankanalgrund (12, 13) bogenförmig gerundet und geht stufenlos sowohl in die Spanfläche (14, 15) der zugeordneten Hauptschneide (6 bzw. 7) als auch in die dieser Spanfläche gegenüberliegende Spankanalseitenwand (16, 17) über. Die Herstel-lung wird in einem mehrachsigen Bearbeitungszentrum bei nur einer Aufspannung und mittels nur eines Fräswerkzeuges vorgenommen.

Fig. 1

Die Erfindung betrifft einen einstückig aus Vollmaterial herausgearbeiteten Zylinderkopfbohrer, mit einem von einem Einspannschaft getragenen Bohrkopf, der mit einer Zentrierspitze, mit zwei Umfangsschneiden, mit zwei etwa radial verlaufenden Hauptschneiden und mit zwei den Hauptschneiden zugeordneten Spankanälen versehen ist, die zur Umfangsfläche und zur rückwärtigen Stirnfläche des Bohrkopfes hin offen sind, sowie ein Verfahren zur Herstellung von Zylinderkopfbohrern.

Derartige einstückige Zylinderkopfbohrer, die vornehmlich zur Bearbeitung von Holz oder Kunststoff verwendet werden, sind seit Jahrzehnten in verschiedenen Ausführungsformen bekannt und z. B. im Katalog "Bohr- und Fräswerkzeuge", 1990, der Firma FAMAG-Werkzeugfabrik Friedr. Aug. Mühlhoff, Remscheid, gezeigt- Je nach der Länge der Umfangsschneiden wird dabei zwischen Forstner-Bohrern bzw. Astlochschneidern, die besonders lange Umfangsschneiden aufweisen, und sogenannten Kunstbohrern unterschieden, bei denen die Umfangsschneiden, im allgemeinen mit Vorschneider bezeichnet, sich jeweils nur über etwa ein Zehntel bis ein Zwölftel des Bohrkopfumfanges erstrecken. Sowohl für die Hauptschneiden als auch für die Umfangsschneiden müssen Freiräume und Kanäle zur Abfuhr der anfallenden Späne vorgesehen sein. Die bekannten Zylinderkopfbohrer haben sich sehr bewährt, jedoch macht bei ihnen die Späneabfuhr Probleme, wenn tiefere Bohrungen ausgeführt werden sollen, welche nicht in einem Arbeitsgang, sondern nur unter zwischenzeitlichem Lüften ausgeführt werden können, da bei den bekannten einstückigen Zylinderkopfbohrern verhältnismäßig vieleckige Freiräume im Bohrkopf herausgearbeitet sind, in denen sich Späne stauen können.

Durch die US-PS 4 090 807 ist ein mehrteilig ausgebildeter Zylinderkopfbohrer bekannt, bei welchem in das Stirnende des Schaftes ein Zentralstück eingeschraubt ist, in das wiederum eine Zentrierspitze eingeschraubt ist. An schrägen Seitenflächen des Zentrierstückes sind zwei, die Hauptschneiden aufweisende Platten angeschweißt, wobei jede Platte an ihrer Rückseite je ein etwa halbkreisförmiges, radial abragendes, angeschweißtes Segment aufweist, an dem Vorschneider ausgebildet sind. Die radial abragenden Segmente sind als verhältnismäßig flache Scheiben ausgebildet und mit einer radialen Eckausnehmung versehen, die jeweils durch die Platte der anderen Hauptschneide begrenzt ist und eine Spanabfuhröffnung bildet. Der radial einwärts liegende Grund der Spanabfuhröffnung ist bogenförmig gerundet. Durch die flache Ausbildung der Segmente sind dort zwar die mit der Späneabfuhr verbundenen Probleme reduziert, was dort aber auf Kosten der Stabilität des Zylinderkopfbohrers erreicht ist. Die Hauptschneiden und die Vorschneider stehen dort etwa rechtwinklig über die Stirnseite der Segmente vor und bilden wieder vieleckige Räume, in denen sich Späne stauen können.

Darüber hinaus ist die Herstellung dieses bekannten, mehrteiligen Zylinderkopfbohrers sehr aufwendig.

Durch die US-PS 3 945 753 ist ein weiterer, aus fünf Teilen zusammengeschraubter Zylinderkopfbohrer bekannt, bei welchem balkenförmige Hauptschneiden vorgesehen sind, an deren radial außenliegenden Ecken kleine, axial vorstehende Vorschneider angeschliffen sind. Sowohl die Hauptschneiden als auch die Vorschneider ragen dort nur geringfügig über die leicht dachförmig ausgebildete Stirnfläche des Bohrkopfes vor, so daß sehr enge Freiräume vorliegen, in denen sich Späne leicht festsetzen können. Dieser bekannte Bohrer ist kaum zum Bohren tieferer Löcher in einem Arbeitsgang geeignet und darüber hinaus sehr aufwendig in seiner Herstellung.

Der Erfindung liegt die Aufgabe zugrunde, einen Zylinderkopfbohrer zu schaffen, mit dem auch tiefere Bohrungen in einem Arbeitsgang ohne Lüften ausgeführt werden können und der nur einen geringen Herstellaufwand erfordert.

Ausgehend von einem Zylinderkopfbohrer der eingangs genannten Art, ist die Lösung dieser Aufgabe dadurch erreicht, daß jeder Spankanalgrund bogenförmig gerundet ist und stufenlos sowohl in die Spanfläche der zugeordneten Hauptschneide als auch in die dieser Spanfläche gegenüberliegende Spankanalseitenwand übergeht und daß die Freiflächen der Hauptschneiden bis zur Innenwandung der in Drehrichtung jeweils nachfolgenden Umfangsschneide eben sind und stufenlos abfallen. Wie praktische Erprobungen ergeben haben, zeichnet sich der Zylinderkopfbohrer nach der Erfindung durch eine wesentlich bessere Spanabfuhr aus, da alle Späneableitflächen glatt sind und stufenlos ineinander übergehen und somit Winkelräume eliminiert sind, in denen Späne brechen und sich festsetzen könnten. Der Zylinderkopfbohrer ist hierdurch wesentlich leichtgängiger, benötigt einen geringeren Anpreßdruck und läßt höhere Schnittleistungen zu, was im Gesamtergebnis dazu führt, daß auch tiefere Bohrungen, deren Tiefe ein Mehrfaches der axialen Höhe des Bohrkopfes beträgt, in einem Arbeitsgang ausgeführt werden können. Darüber hinaus tritt auch nur eine geringere Erwärmung des Zylinderkopfbohrers auf, wodurch dessen Standzeit erhöht ist.

Der Erfindung zufolge kann der Abstand zwischen Spanfläche und gegenüberliegender Spankanalseitenwand etwa zwischen einem Siebtel bis einem Zehntel des Bohrkopfumfanges betragen, wobei bei Bohrköpfen mit einem Durchmesser von 30 bis 40 Millimetern der Abstand zwischen Spanfläche und gegenüberliegender Spankanalseitenwand etwa ein Achtel des Bohrkopfumfanges vorzugsweise beträgt. Durch diese Maßnahme wird gegenüber den bekannten Zylinderkopfbohrern eine größere, lichte Weite für die Spankanäle geschaffen, was ebenfalls im Hinblick auf die Späneabfuhr von Vorteil ist.

In Weiterbildung der Erfindung können die Freiflächen der Hauptschneiden gegenüber der Achse des Einspannschaftes um einen Winkel von etwa 30° geneigt sein. Ferner kann vorgesehen werden, daß jeder Spankanal seine zugehörige Hauptschneide bohrkopfeinwärts überragt und daß der bogenförmige Spankanalgrund bis in die Freifläche der jeweils anderen Hauptschneide hineinragt. Dadurch münden die Freiflächen als geneigt abfallende Rampen unmittelbar in die Spankanäle, so daß sich auch in den über den Freiflächen liegenden Freiräume kein Spänematerial festsetzen kann.

Nach weiteren Merkmalen der Erfindung ist vorteilhafterweise die Erzeugende des zylindrisch gekrümmten Spankanalgrundes - in Projektion auf die Ebene gesehen, die von der zugehörigen Hauptschneide und der Achse des Einspannschaftes aufgespannt ist -, um einen Winkel von etwa 40° gegenüber der Achse des Einspannschaftes geneigt.

Der Zylinderkopfbohrer nach der Erfindung kann mit watenfreien Hauptschneiden und Umfangsschneiden gebildet werden, wodurch Nachschleifarbeiten erübrigt, bzw. auf ein Minimum begrenzt werden.

Der Zylinderkopfbohrer nach der Erfindung kann auf üblichen Fräsbänken hergestellt werden, indem das Werkstück wie üblich in verschiedenen Aufspannlagen und mit mehreren unterschiedlichen Werkzeugen bearbeitet wird, was allerdings einen relativ aufwendigen Herstellprozeß bedingt.

Zur Verringerung des Herstellaufwandes ist erfindungsgemäß ein neues Verfahren zur Herstellung solcher Zylinderkopfbohrer vorgesehen, das dadurch gekennzeichnet ist, daß ein Werkstück (Rohling) in einem Drei- oder Vier-Achsen-Bearbeitungszentrum aufgespannt und unter Beibehaltung dieser Aufspannung mittels eines einzigen Werkzeuges, z. B. eines Fingerfräsers, bearbeitet wird, wobei

a) zunächst einer der Spankanäle,

b) danach die Freifläche der diesem Spankanal nicht zugeordneten Hauptschneide,

c) nachfolgend die Zentrierspitze an zwei Seiten und

d) anschließend die Innenwandung der an die Freifläche angrenzenden Umfangsschneide gefräst werden,

e) danach das Werkstück um 180° geteilt, d. h. seine Aufspannvorrichtung um 180° gedreht, und die Fräsvorgänge a) bis d) zwecks Ausbildung des zweiten Spankanals, der zweiten Freifläche, der vollständigen Zentrierspitze und der zweiten Umfangsschneide wiederholt werden.

Dieses Verfahren erlaubt die Fertigung von Bohrköpfen mit gleichbleibenden Abmessungen und Toleranzen. Zudem ist die Fertigung mit wesentlich geringerem Zeitaufwand verbunden als bisher. Die erzielte größere Fertigungsgenauigkeit erübrigt oder minimiert Nacharbeiten beim Schleifen.

Der Gegenstand der Erfindung wird im folgenden anhand der Zeichnung näher erläutert, in der zeigen:

Fig. 1 in einer perspektivischen Skizze einen Zylinderkopfbohrer, und zwar einen sogenannten Forstner-Bohrer,

Fig. 2 eine Stirnansicht auf den Zylinderkopfbohrer nach Fig. 1,

Fig. 3 eine Seitenansicht auf den Zylinderkopfbohrer, in Fig. 2 in Richtung des Pfeiles III gesehen,

Fig. 4 eine Seitenansicht, in Richtung des Pfeiles IV in Fig. 2 gesehen,

Fig. 5 eine Stirnansicht auf ein zweites Ausführungsbeispiel, und zwar auf einen sogenannten Kunstbohrer,

Fig. 6 eine Seitenansicht auf den Zylinderkopfboher nach Fig. 5 und

Fig. 7 bis 12 einen Zylinderkopfbohrer in sechs aufeinanderfolgenden Fertigungszwischenstufen.

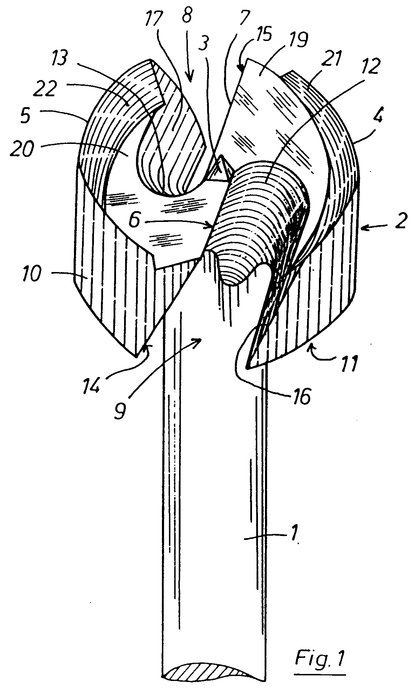

Der in den Fig. 1 bis 4 gezeigte Zylinderkopfbohrer weint einen von einem Einspannschaft 1 getragenen Bohrkopf 2 auf, der mit einer Zentrierspitze 3, mit zwei Umfangsschneiden 4, 5, mit zwei etwa radial verlaufenden Hauptschneiden 6, 7 und mit zwei den Hauptschneiden 6, 7 zugeordneten Spankanälen 8, 9 versehen ist. Die Spankanäle 8, 9 sind zur Umfangsfläche 10 und zur rückwärtigen Stirnfläche 11 des Bohrkopfes 2 hin offen. Jeder Spankanalgrund 12, 13, ist bogenförmig gerundet und geht stufenlos sowohl in die Spanfläche 14, 15 der zugeordneten Hauptschneide 6 bzw. 7 über als auch in die dieser Spanfläche 14, 15 gegenüberliegende Spankanalseitenwand 16 bzw. 17.

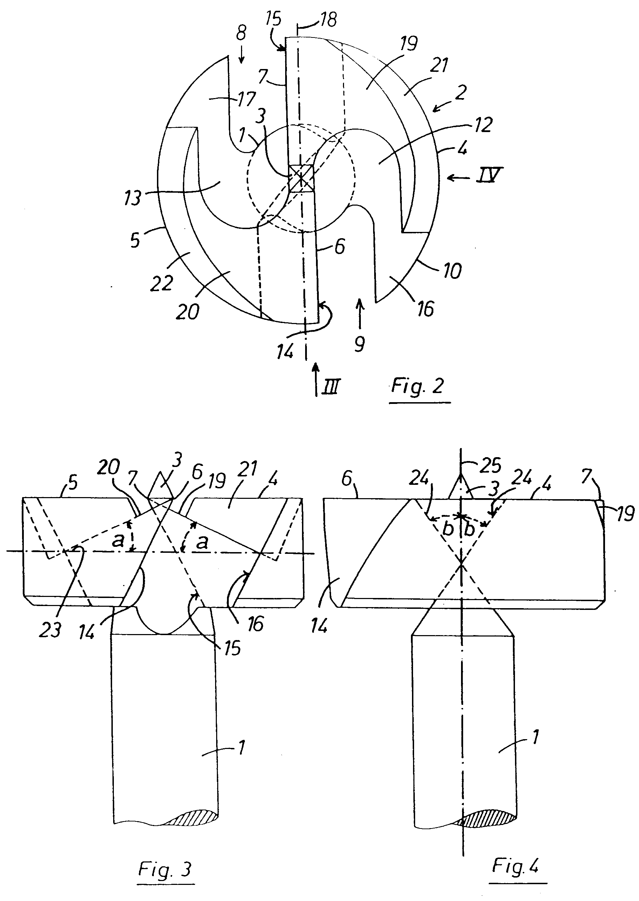

Die Spankanäle 8, 9 sind gegenüber der zu den Hauptschneiden 6, 7 parallelen Längsmittelebene 18 geneigt, vergleiche insbesondere Fig. 2. Der Abstand zwischen den Spanflächen 14, 15 und der jeweils gegenüberliegenden Spankanalseitenwand 16 bzw. 17 beträgt beim Ausführungsbeispiel etwa ein Achtel der Umfangslänge des Bohrkopfes 2.

Die Freiflächen 19, 20 fallen eben und stufenlos bis zur Innenwandung 21, 22 der in Drehrichtung jeweils nachfolgenden Umfangsschneide 4, 5 ab, wobei die Freiflächen 19, 20 gegenüber der Querebene 23 des Bohrkopfes 2 um je einen Winkel a von etwa 30° geneigt sind. Jeder Spankanal 8, 9 überragt bohrkopfeinwärts seine zugehörige Hauptschneide 6, 7, und der bogenförmige Spankanalgrund 12, 13 ragt jeweils bis in die Freifläche 19, 20 der jeweils anderen Hauptschneide 6, 7 hinein. Wie insbesondere aus Fig. 4 ersichtlich ist, ist die Erzeugende 24 des zylindrisch gekrümmten Spankanalgrundes 12 bzw. 13 - in Projektion auf die Ebene gesehen, die von der zugehörigen Hauptschneide 6 bzw. 7 und der Achse 25 des Einspannschaftes 1 aufgespannt ist -, um einen Winkel b von etwa 40° gegenüber der Achse 25 des Einspannschaftes 1 geneigt. Die Hauptschneiden 6, 7 und die Umfangsschneiden 4, 5 sind beim Ausführungsbeispiel watenfrei ausgebildet. Wie insbesondere aus Fig. 1 ersichtlich, sind alle aus dem zylindrischen Bohrkopf 2 herausgearbeiteten Freiräume, d. h. die beiden Freiräume oberhalb der Freiflächen 19, 20 und die von den Spankanälen 8, 9 gebildeten Freiräume, glattwandig ausgebildet und sind Ecken oder Winkel, an denen sich Späne festsetzen könnten, vermieden.

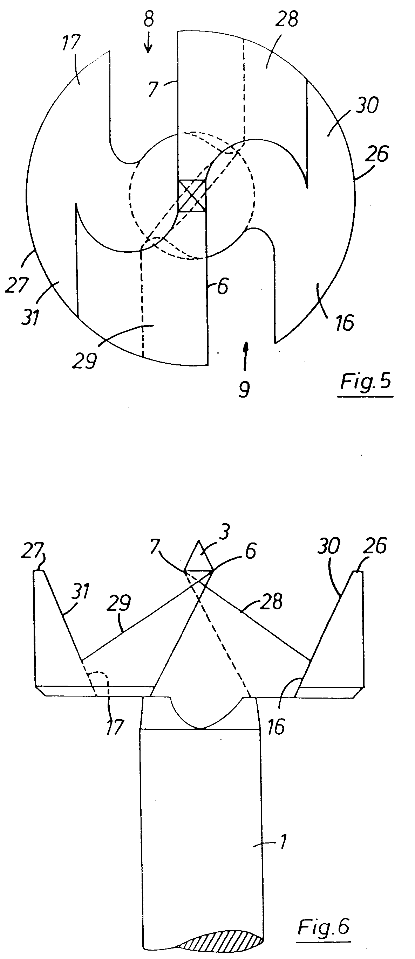

Das in den Fig. 5 und 6 gezeigte zweite Ausführungsbeispiel, bei dem es sich um einen sogenannten Kunstbohrer handelt, unterscheidet sich vom ersten Ausführungsbeispiel dadurch, daß hier die Umfangsschneiden 26, 27, entsprechend den Vorschneidern solcher Kunstbohrer, wesentlich kürzer bemessen sind. Die Freiflächen 28, 29 sind hier größer, und die Innenwandungen 30, 31 der Umfangsschneiden 26, 27 gehen eben in die Spankanalseitenwände 16, 17 über.

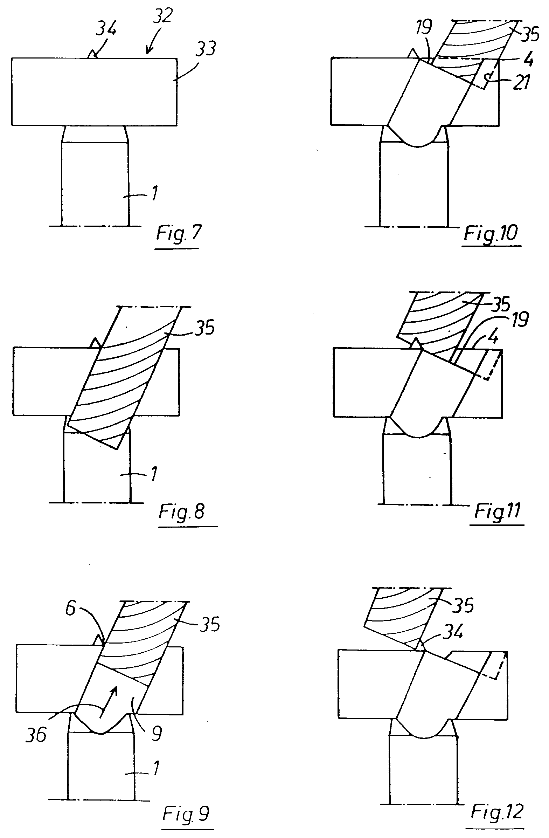

Zur Herstellung solcher, um 180° rotationssymmetrischer Zylinderkopfbohrer wird von einem Werkstück 32 gemäß Fig. 7 ausgegangen, bei welchem der Bohrer noch als Vollzylinder 33 vorliegt und die Zentrierspitze 34 kegelig ist. Das Werkstück 32 wird mit seinem Einspannschaft 1 in einem Teilkreis eines Bearbeitungszentrums eingespannt, das mit einer Einstellmöglichkeit für das Werkzeug um mehrere Achsen ausgerüstet ist. Als Werkzeug wird ein Schaft- oder Fingerfräser 35 verwendet. In einem ersten Arbeitsgang (vergleiche Fig. 8) wird der Fingerfräser 35 senkrecht zur Darstellungsebene nach Fig. 8 vom Rand des Vollzylinders 33 her eingeführt, bis er den Einspannschaft 1 erreicht. Bei Erreichen des Einspannschaftes 1 tritt zu dieser Einwärtsbewegung des Fingerfräsers 35 noch eine Aufwärtsbewegung in Richtung des Pfeiles 36 nach Fig. 9 überlagernd hinzu, so daß ein erster Spankanal 9 mit abgerundetem Spankanalgrund 12 und die Hauptschneide 6 ausgebildet werden. In nächsten Schritten gemäß Fig. 10 und 11 werden mit dem Fingerfäser 35 eine Freifläche 19 und die Innenwandung 21 einer Umfangsschneide 4 und diese Umfangsschneide 4 ausgebildet. Sodann werden mit dem Fingerfräser zwei Seiten der Zentrierspitze 34 planbearbeitet, vergleiche Fig. 12. Danach wird der Fingerfräser 35 herausgefahren, und das Werkstück 32 wird um 180° geteilt, d. h. seine Aufspannvorrichtung um 180° gedreht. Anschließend werden die Fräsvorgänge nach den Fig. 8 bis 12 an der gegenüberliegenden Seite des Bohrkopfes 2 ausgeführt, wobei dann der zweite Spankanal 8 mit Hauptschneide 7, die zweite Freifläche 20 und die zweite Innenwandung 22 mit der zweiten Umfangsschneide 5 herausgearbeitet werden und die Zentrierspitze 34 zu einer Pyramidenspitze fertig bearbeitet wird. Wie die Fig. 8 bis 12 veranschaulichen, werden bei diesen Fräsarbeiten die Hauptschneiden 6, 7 und Umfangsschneiden 4, 5 sofort in ihrer Endform gefräst, so daß sich das Schleifen von Watenflächen erübrigt und höchstens geringe Nachbearbeitungen noch erforderlich sind.

| Bezugszeichenliste | | | |
|---|---|---|---|
| 1 | Einspannschaft | 31 | Innenwandung |
| 2 | Bohrkopf | 32 | Rohling-Werkstück |
| 3 | Zentrierspitze | 33 | Vollzylinder |
| 4 | Umfangsschneide | 34 | Zentrierspitze |
| 5 | Umfangsschneide | 35 | Fräser |
| 6 | Hauptschneide | 36 | Pfeil |
| 7 | Hauptschneide | | |
| 8 | Spankanal | a | Neigungswinkel von Freiflächen 19, 20 |
| 9 | Spankanal | | |
| 0 | Umfangsfläche | b | Neigungswinkel von Spankanalgrund 12, 13 |
| 11 | Stirnfläche | | |
| 12 | Spankanalgrund | | |
| 13 | Spankanalgrund | | |
| 14 | Spanfläche | | |
| 15 | Spanfläche | | |
| 16 | Spankanalseitenwand | | |
| 17 | Spankanalseitenwand | | |
| 18 | Längsmittelebene | | |
| 19 | Freifläche | | |
| 20 | Freifläche | | |
| 21 | Innenwandung | | |
| 22 | Innenwandung | | |
| 23 | Querebene | | |
| 24 | Erzeugende | | |
| 25 | Achse | | |
| 26 | Umfangsschneide | | |
| 27 | Umfangsschneide | | |
| 28 | Freifläche | | |
| 29 | Freifläche | | |
| 30 | Innenwandung | | |

**Patentansprüche**

1. Einstückig aus Vollmaterial herausgearbeiteter Zylinderkopfbohrer, mit einem von einem Einspannschaft (1) getragenen Bohrkopf (2), der mit einer Zentrierspitze (3), mit zwei Umfangsschneiden (4, 5; 26, 27) mit zwei etwa radial verlaufenden Hauptschneiden (6, 7) und mit zwei den Hauptschneiden (6, 7) zugeordneten Spankanälen (8, 9) versehen ist, die zur Umfangsfläche (10) und zur rückwärtigen Stirnfläche (11) des Bohrkopfes (2) hin offen sind, dadurch gekennzeichnet, daß jeder Spankanalgrund (12, 13) bogenförmig gerundet ist und stufenlos sowohl in die Spanfläche (14, 15) der zugeordneten Hauptschneide (6 bzw. 7) als auch in die dieser Spanfläche (14, 15) gegenüberliegende Spankanalseitenwand (16, 17) übergeht und daß die Freiflächen (19, 20; 28, 29) der Hauptschneiden (6, 7) bis zur Innenwandung (21, 22; 30, 31) der in Drehrichtung jeweils nachfolgenden Umfangsschneide (4, 5; 26, 27) eben sind und stufenlos abfallen.

2. Zylinderkopfbohrer nach Anspruch 1, dadurch gekennzeichnet, daß der Abstand zwischen Spanfläche (14, 15) und gegenüberliegender Spankanalseitenwand (16, 17) etwa zwischen einem Siebtel bis einem Zehntel des Bohrkopfumfanges beträgt.

3. Zylinderkopfbohrer nach Anspruch 2, dadurch gekennzeichnet, daß bei Bohrköpfen (2) mit einem Durchmesser von 30 bis 40 Millimetern der Abstand zwischen Spanfläche (14, 15) und gegenüberliegender Spankanalseitenwand (16, 17) etwa ein Achtel des Bohrkopfumfanges beträgt.

4. Zylinderkopfbohrer nach den Ansprüchen 1 bis 3, dadurch gekennzeichnet, daß die Freiflächen (19, 20;

5

28, 29) gegenüber der Querebene (23) des Bohrkopfes (2) um einen Winkel (a) von etwa 30° geneigt sind.

5. Zylinderkopfbohrer nach einem oder mehreren der Ansprüche 1 bis 4, dadurch gekennzeichnet, daß jeder Spankanal (8, 9) seine zugehörige Hauptschneide (6, 7) bohrkopfeinwärts überragt und daß der bogenförmige Spankanalgrund (12, 13) bis in die Freifläche (19, 20; 28, 29) der jeweils anderen Hauptschneide (6, 7) hineinragt.

6. Zylinderkopfbohrer nach Anspruch 4, dadurch gekennzeichnet, daß die Erzeugende (24) des zylindrisch gekrümmten Spankanalgrundes (12, 13), - in Projektion auf die Ebene gesehen, die von der zugehörigen Hauptschneide (6 bzw. 7) und der Achse (25) des Einspannschaftes (1) aufgespannt ist -, um einen Winkel (b) von etwa 40° gegenüber der Achse (25) des Einspannschaftes (1) geneigt ist.

7. Zylinderkopfbohrer nach den Ansprüchen 1 bis 6, dadurch gekennzeichnet, daß die Hauptschneiden (6, 7) und die Umfangsschneiden (4, 5; 26, 27) watenfrei ausgebildet sind.

8. Verfahren zur Herstellung eines Zylinderkopfbohrers nach Anspruch 1, dadurch gekennzeichnet, daß ein Werkstück (32) in einem Drei- oder Vier-Achsen-Barbeitungszentrum aufgespannt und unter Beibehaltung dieser Aufspannung mittels eines einzigen Werkzeuges, z. B. eines Fingerfräsers (35) bearbeitet wird, wobei
a) zunächst einer (9) der Spankanäle (8, 9),
b) danach die Freifläche (19; 28) der diesem Spankanal (9) nicht zugeordneten Hauptschneide (7),
c) nachfolgend die Zentrierspitze (34) an zwei Seiten und
d) anschließend die Innenwandung (21; 30) der an die Freifläche (19; 28) angrenzenden Umfangsschneide (4; 26) gefräst werden,
e) daß anschließend das Werkstück (32) um 180° geteilt und die Fräsvorgänge a) bis d) zwecks Ausbildung des zweiten Spankanales (8), der zweiten Freifläche (20; 29), der vollständigen Zentrierspitze (34) und der zweiten Umfangsschneide (5; 27) wiederholt werden.

*Fig. 1*

EP 0 512 388 A2

*Fig. 2*

*Fig. 3*

*Fig. 4*

8

*Fig. 5*

*Fig. 6*

Fig. 7

Fig. 8

Fig. 9

Fig.10

Fig.11

Fig.12